# EUROPÄISCHE PATENTSCHRIFT

(11) **EP 3 034 132 B1**
(45) Veröffentlichungstag und Bekanntmachung des Hinweises auf die Patenterteilung: **28.06.2023**
(21) Anmeldenummer: 15003579.8
(22) Anmeldetag: 16.12.2015
(51) Int. Cl.: A62B 9/04

(54) **CODIERTES KUPPLUNGSSYSTEM ZUR VERSORGUNG EINES VERBRAUCHERS MIT EINEM MEDIUM**
ENCODED COUPLING SYSTEM FOR SUPPLYING A CONSUMER WITH A MEDIUM
SYSTEME DE COUPLAGE CODE DESTINE A ALIMENTER UN CONSOMMATEUR EN UN MILIEU

(30) Priorität: 16.12.2014 DE 102014018727
(43) Veröffentlichungstag der Anmeldung: 22.06.2016
(73) Patentinhaber: Dräger Safety AG & Co. KGaA, 23560 Lübeck (DE)
(72) Erfinder: Carsten, Joester, 23569 Lübeck (DE)
(74) Vertreter: Meyer-Gramann, Klaus Dieter

(56) Entgegenhaltungen:
- DE-A1- 3 937 513
- US-A- 5 678 542
- US-A1- 2004 011 396
- US-A1- 2007 257 484
- US-A1- 2011 148 097

## Beschreibung

Die Erfindung betrifft eine Vorrichtung zur Versorgung eines Verbrauchers mit einem Medium. Hierbei ist ein Versorgungsnetz mit Leitungselementen mit wenigstens einem Steckverbinder zur Verbindung wenigstens zweier Leitungselemente vorgesehen, über das der Verbraucher von einer Quelle mit dem Medium versorgbar ist. Der wenigstens eine Steckverbinder verfügt über einen Stecker und eine Kupplung mit einer Codierung zur vertauschungssicheren Verbindung des Steckers mit der Kupplung, so dass stets sichergestellt ist, dass der Verbraucher ausreichend mit dem Medium versorgt wird.

Im Bereich der Gas- und Druckluftversorgung ist eine Vielzahl unterschiedlicher Kupplungssysteme bekannt, mit denen die jeweils benötigten Rohr- oder Schlauchleitungen mit den Geräten verbunden werden können. Bei der Herstellung entsprechender Versorgungsnetze ist einerseits darauf zu achten, dass Leckagen vermieden werden und andererseits, dass in Bezug auf die verwendeten Medien an den erforderlichen Verbindungsstellen keine Vertauschungen auftreten. Die jeweils in den Versorgungsnetzen an Verbindungsstellen vorgesehenen Steckverbindungen stellen hierbei Schwachpunkte dar.

Im Allgemeinen sind Steckverbindungen bekannt, die ein einfaches und schnelles Verbinden eines Steckers mit der hierfür vorgesehenen Kupplung sicherstellen. In diesem Zusammenhang ist beispielsweise aus der DE 10 2009 060 614 A1 eine Schnellkupplung, wie sie für Druckluftversorgungssysteme nutzbar ist, bekannt. Der beschriebene Schnellverbinder verfügt über einen Stecker und eine Kupplung, durch die eine sichere Handhabung gewährleistet werden soll. Bei der beschriebenen Steckverbindung ist die Kupplung quasi zweistufig mit dem Stecker verbindbar ist, so dass sichergestellt wird, dass selbst im Falle einer nicht vollkommen korrekten Verbindung von Stecker und Kupplung der Stecker unter Einwirkung der Druckluft nicht vollständig nach außen gestoßen wird und zumindest eine minimale Druckluftversorgung erfolgt. Um dies zu gewährleisten, wird in einer ersten Stellung eine druckdichte Verbindung hergestellt, während in einer zweiten Stellung der Stecker zwar nicht aus der Kupplung ausgestoßen wird, aber ein deutliches Leckagegeräusch wahrzunehmen ist, wodurch angezeigt wird, dass keine ordnungsgemäße Verbindung zwischen Stecker und Kupplung besteht.

Sofern Verbraucher, insbesondere Atemschutzgeräteträger, mit einem Medium versorgt werden, ist nicht nur eine druckdichte Verbindung von Stecker und Kupplung wichtig, sondern auch, dass der Verbraucher eine ausreichende Menge des jeweils benötigten Mediums, beispielsweise sauerstoffreiche Atemluft, erhält. Bei großen Versorgungsnetzen ist hierbei sicherzustellen, dass jeder Verbraucher, insbesondere wenn es sich um Personen handelt, die Atemluft benötigen, die ausreichende Menge des jeweiligen Mediums erhält.

Für Versorgungsnetze die Verbraucher, bei denen es sich um Personen und/oder Geräte handeln kann, mit Druckluft versorgen, werden bislang Sicherheitskupplungen verwendet, wobei teilweise mehrere Verbraucher an eine Kupplung angeschlossen sind, siehe zum Beispiel US 2011/148097 A1. In einem derartigen Versorgungsnetz ist es möglich, über geeignete Kupplungen und Verteiler mehrere Atemschutzgeräteträger an eine Druckluftquelle anzuschließen. Hierbei kann es vorkommen, dass die zur Verfügung stehende Druckluftquelle nicht für jeden Verbraucher die von ihm benötigte Atemluftmenge zur Verfügung stellen kann.

Um sicherzustellen, dass ein Verbraucher mit der von ihm benötigten Menge eines Mediums, insbesondere mit der von ihm benötigten Atemluftmenge, versorgt wird, weisen die derzeit verwendeten codierten Sicherheitskupplungen eine sogenannte 1:1-Codierung auf. Hierdurch wird sichergestellt, dass ein Verbraucher, insbesondere ein Atemschutzgeräteträger oder ein druckluftbetriebenes Werkzeug, mit der jeweils benötigten Druckluftmenge einer Druckluftquelle zugeordnet ist. Einem Verbraucher muss immer genau eine codierte Quelle zur Verfügung stehen, wobei es nicht möglich, Verbraucher, die eine geringere Menge Druckluft benötigen, an Druckluftquellen anzuschließen, die eine größere Menge Druckluftbereitstellen können.

Derart codierte Schnellkupplungen werden unter anderem von der Firma Parker Hannifin GmbH, beispielsweise unter der Typenbezeichnung RECTUS Serie 21KA, angeboten. Hierbei verfügen die Stecker sowie die entsprechenden Kupplungen sowohl über eine Farb- als auch eine Formcodierung, so dass sichergestellt wird, dass ein Vertauschen der Stecker und Kupplungen von Leitungen, die unterschiedliche Medien fördern, beim Verbinden ausgeschlossen ist.

Ausgehend von den aus dem Stand der Technik bekannten Verbindungssystemen sowie den zuvor geschilderten Problemen liegt der Erfindung die Aufgabe zugrunde, eine Steckverbindung bestehend aus Stecker und Kupplung derart weiterzubilden, dass auch in Versorgungssystemen, in denen mehr als ein Verbraucher mit einem fluidförmigen Medium versorgt wird, einerseits mehrere Verbraucher an eine Quelle angeschlossen werden können und andererseits zu jedem Zeitpunkt sichergestellt ist, dass jeder Verbraucher mit einer ausreichenden Menge des benötigten Mediums versorgt wird. Die anzugebende Steckverbindung soll hierbei in ihrem Aufbau vergleichsweise einfach gestaltet sein und gleichzeitig eine zügige und zuverlässige Herstellung einer sicheren Verbindung gewährleisten. Weiterhin soll sich eine derartige Steckverbindung auch in bereits vorhandene Versorgungssysteme integrieren lassen.

Die vorstehende Aufgabe wird mit einer Vorrichtung gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die erfindungsgemäß ausgeführte Vorrichtung zur Versorgung eines Verbrauchers mit einem fluidförmigen Medium verfügt über zwei Versorgungsnetze mit Leitungselementen und mit wenigstens einem Steckverbinder zur Verbindung wenigstens zweier Leitungselemente. Über jedes Versorgungsnetz ist der Verbraucher von einer Quelle mit dem Medium versorgbar, wobei der wenigstens eine Steckverbinder über einen Stecker und eine Kupplung mit einer Codierung zur vertauschungssicheren Verbindung des Steckers mit der Kupplung verfügt, so dass eine ausreichende Versorgung des Verbrauchers mit dem Medium sichergestellt ist. Erfindungsgemäß ist diese Vorrichtung derart weitergebildet worden, dass zeitgleich wenigstens zwei Verbraucher über eines der Versorgungsnetze von der jeweiligen Quelle mit einem fluidförmigen Medium versorgbar sind und die Codierung derart ausgeführt ist, dass die von den wenigstens zwei Verbrauchern je Zeiteinheit benötigte Menge des Mediums oder nicht größer als die von der Quelle pro Zeiteinheit maximal bereitstellbare Menge des Mediums ist.

Die erfindungsgemäße technische Lösung stellt somit sicher, dass auch in einem Versorgungsnetz, in dem wenigstens zwei Verbraucher mit einem fluidförmigen Medium versorgt werden, alle Verbraucher stets mit einer ausreichenden Menge des Mediums versorgt werden. Hierbei ist die Codierung der Steckverbinder derart ausgeführt, dass eine Quelle mit einer entsprechend großen Förderleistung eines fluidförmigen Mediums verwendet werden kann, um wenigstens zwei an das Versorgungsnetz angeschlossene Verbraucher, die jeweils einen kleineren Volumenstrom des fluidförmigen Mediums benötigen, zu versorgen. Hierbei ist stets sichergestellt, dass die im Versorgungsnetz pro Zeiteinheit benötigte Menge eines fluidförmigen Mediums nicht größer als die von einer Quelle bereitstellbare Menge eines Mediums ist. Mit der beschriebenen erfindungsgemäßen technischen Lösung ist es somit möglich, sowohl einen Verbraucher mit einer vergleichsweise leistungsschwachen Quelle als auch eine Mehrzahl von Verbrauchern mit einer leistungsstarken Quelle zu verbinden. Zu jedem Zeitpunkt ist allerdings sichergestellt, dass jeder an das Versorgungsnetz angeschlossene Verbraucher, insbesondere ein Atemschutzgeräteträger, mit der pro Zeiteinheit benötigten Menge des benötigten Mediums versorgt wird.

Gemäß einer ersten speziellen Ausführungsform der Erfindung ist im Versorgungsnetz wenigstens ein Abzweigelement mit einer Verzweigung vorgesehen, das quellenseitig mit einem einzigen Leitungselement und verbraucherseitig mit wenigstens zwei Leitungselementen verbindbar ist. Ein derart ausgeführtes, in Bezug auf die Strömungsführung Y-förmiges Abzweigelement verfügt über eine Verzweigung des fluiddurchströmten Strömungskanals, so dass wenigstens zwei Verbraucher mit der Quelle verbindbar sind. Entsprechend seiner Ausführung verfügt das Abzweigelement auf der einen Seite über zumindest einen Stecker und an der gegenüberliegenden Seite über wenigstens eine Kupplung, wobei bedarfsgerecht eine Verzweigung von einem Stecker zu einer Mehrzahl von Kupplungen oder von einer Kupplung zu einer Mehrzahl von Steckern realisierbar ist. Die Anzahl der anschließbaren Verbraucher ist grundsätzlich frei wählbar, wird aber üblicherweise an die Leistungsstärke der Quelle angepasst. Auch in diesem Fall sind die jeweils vorgesehenen Kupplungen und Stecker des Abzweigelements derart codiert, dass zu jeder Zeit sichergestellt ist, dass an den verbraucherseitig vorgesehenen Anschlüssen insgesamt eine im Vergleich zur quellenseitig dem Abzweigelement zur Verfügung gestellten Förderleistung eines Mediums gleich große oder kleinere Leistung abgefordert wird.

In einer besonders geeigneten Weiterbildung der Erfindung ist die Steckverbindung derart ausgeführt, dass der Stecker verbraucherseitig und die Kupplung quellenseitig angeordnet ist. Möchte sich ein Verbraucher an ein Versorgungsnetz anschließen, so führt er seinen mitgeführten Stecker in die entsprechende Kupplung ein. Hierbei wird durch die erfindungsgemäß vorgesehene Codierung sichergestellt, dass der Stecker nur dann in die Kupplung eingeführt werden kann, sofern der kupplungsseitig bereitstellbare Volumenstrom eines Mediums ausreichend ist, um den Verbraucher zu jeder Zeit zu versorgen. Sofern der Verbraucher eine größere Menge eines Mediums pro Zeiteinheit benötigt, als kupplungsseitig bereitgestellt wird, so ist die Codierung derart ausgeführt, dass der Stecker nicht in die Kupplung eingeführt werden kann.

In einer besonderen Ausführungsform der Erfindung handelt es sich bei der Quelle um einen Drucklufterzeuger, eine Gasversorgungseinheit, insbesondere eine Atemluftversorgungseinheit, einen Stromgenerator und/oder eine stationäre Steckdose. Erfindungswesentlich hierbei ist stets, dass innerhalb eines Versorgungsnetzes, das zur Versorgung eines Verbrauchers mit einem Medium, insbesondere mit einem druckbeaufschlagten Fluid wie Luft oder einem speziellen Gas, vorgesehen ist, Stecker sowie Kupplungen über eine Codierung verfügen, die sicherstellt, dass Verbraucher stets an eine gleichgroße oder größere Quelle, hingegen nicht an eine zu klein dimensionierte Quelle anschließbar sind. Die Ausdrücke größer bzw. kleiner beziehen sich hierbei auf die von der Quelle bereitstellbare Leistung sowie die zur ausreichenden Versorgung der Verbraucher im Versorgungsnetz benötigte Leistung.

Gemäß einer bevorzugten Gestaltung der erfindungsgemäßen technischen Lösung weist die Codierung im Verbindungsbereich zwischen Stecker und Kupplung eine Außenkontur am Stecker auf, die in eine Gegenkontur im Innenbereich der Kupplung einführbar ist. Vorzugsweise verfügt eine derartige Außen- und Gegenkontur über einen runden, ovalen oder mehreckigen Querschnitt. Alternativ oder in Ergänzung kann ferner vorgesehen sein, dass die Codierung in Abhängigkeit der Größe der Querschnittsflächen, also durch geeignete Variation des Umfangs bzw. des Abstandes zweier auf dem Außenumfang gegenüber liegend angeordneter Punkte, im Verbindungsbereich von Stecker und Kupplung ausgeführt ist. Stets sind die Formen und/oder Abmessungen der am Stecker sowie der Kupplung vorgesehenen Codierungen derart ausgeführt, dass der steckerseitig benötigte Volumenstrom eines fluidförmigen Mediums kupplungsseitig bereitgestellt wird. Dies bedeutet, dass die Quelle hinsichtlich der pro Zeiteinheit bereitstellbaren Menge eines Mediums, also hinsichtlich ihrer Leistungsstärke, stets gleich oder größer ist als die von jedem einzelnen an das Versorgungsnetz angeschlossenen Verbraucher benötigten Leistung.

Erfindungsgemäß, sind ein erster Steckverbinder mit einer ersten Codierung und wenigstens ein zweiter Steckverbinder mit einer zweiten Codierung vorgesehen, wobei sich die erste Codierung von der zweiten Codierung unterscheidet. Gemäß dieser Ausführungsform sind somit Verbraucher, die über einen unterschiedlichen Leistungsbedarf verfügen, an eine Quelle angeschlossen, wobei beide Verbraucher stets zu jeder Zeit mit einer ausreichenden Menge des benötigten Mediums versorgt werden.

Auf vorteilhafte Weise verfügt die Codierung über eine optisch und/oder haptisch wahrnehmbare Markierung. Eine entsprechende Markierung kann beispielsweise in Form einer farblichen Markierung, einer Rändelung und/oder anderer Markierungen ausgeführt sein. Alternativ oder in Ergänzung ist es denkbar, dass sich eine Codierung durch die Länge eines Steckerschafts bzw. einer der Kupplung angeordneten Aufnahme für den Schaft auszeichnet. Die Länge des Steckerschafts bzw. der Kupplungsaufnahme für den Schaft wird hierbei in Abhängigkeit der kupplungsseitig pro Zeiteinheit bereitstellbaren Menge eines Mediums gewählt. Hierbei wird wiederum sichergestellt, dass nur Stecker in Kupplungen einführbar sind, so dass der kupplungsseitig bereit gestellte Volumenstrom eines fluidförmigen Mediums stets gleich oder größer des steckerseitig benötigten Volumenstroms ist. Abzweige werden in diesem Zusammenhang derart ausgeführt, dass die kupplungsseitig pro Zeiteinheit bereitstellbare Menge eines Mediums nicht größer als die steckerseitig in den Abzweig einführbare Menge eines Mediums ist. Die Summe der kupplungsseitig abnehmbaren Menge eines Mediums ist somit stets gleich oder kleiner der steckerseitig in den Abzweig einführbaren Menge eines Mediums.

Insgesamt wird die Codierung stets derart ausgeführt, dass in einem Versorgungsnetz, das eine Quelle und wenigstens zwei Verbraucher. aufweist, sichergestellt ist, dass jeder Verbraucher in ausreichendem Maße von der einen Quelle mit dem benötigten fluidförmigen Medium versorgt wird. Auf diese Weise ist es möglich, auch eine Mehrzahl vergleichsweise kleiner Verbraucher an eine Quelle anzuschließen, ohne dass dies zu einer Unterversorgung der Verbraucher führt.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Figur 1:: Schematische Darstellung der Anschlussmöglichkeit unterschiedlicher Verbraucher von Atemluft an Atemluftgeneratoren;
- Figur 2:: Kupplungssystem für unterschiedliche Volumenstromraten mit Codierung (unterschiedlicher Durchmesser, unterschiedliche Länge);
- Figur 3:: Kupplungssystem für unterschiedliche Volumenströme mit Codierung (unterschiedliche Kontur);
- Figur 4:: Hülsen für codierte Mitteldruckstecker.

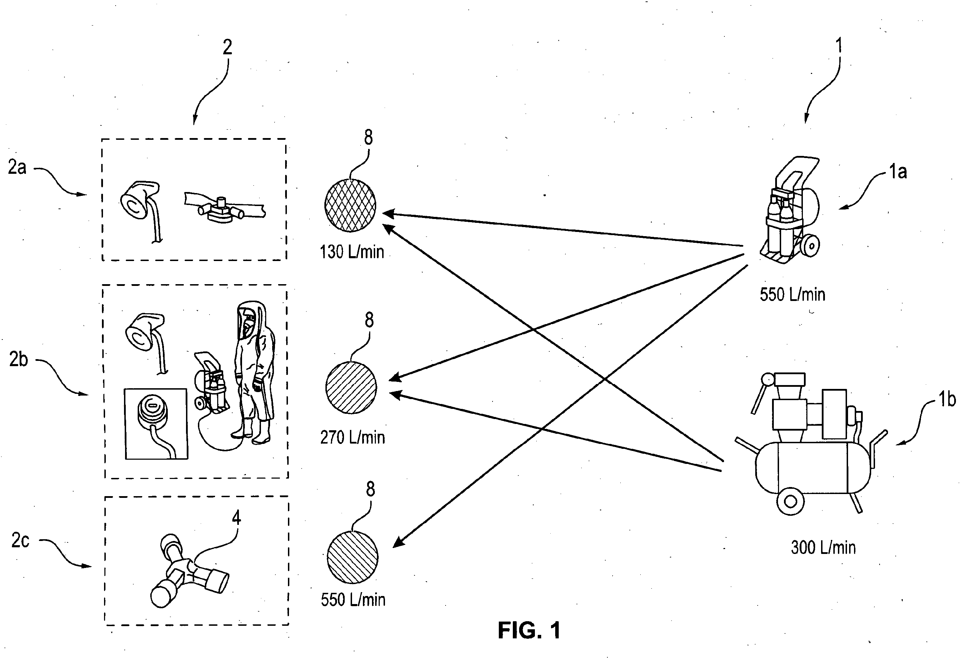

Figur 1 zeigt schematisch zwei erfindungsgemäß ausgeführte Versorgungsnetze 3, die jeweils über eine Quelle 1 zur Versorgung von Verbrauchern 2 in Form von Atemschutzgeräteträgern sowie pneumatisch angetriebenen Werkzeugen verfügen. Bei den dargestellten Quellen 1 handelt es sich um Druckluftquellen, die Atemluft und/oder Sauerstoff aus geeigneten Druckbehältern bzw. mithilfe einer Kompressoreinheit zur Verfügung stellen. Die in Figur 1 dargestellten Quellen 1 unterscheiden sich vor allem hinsichtlich der maximal möglichen Förderleistung. Während die obere Quelle 1a mit Hilfe von Druckgasflaschen einen Volumenstrom von 550 Liter Atemgas/min bereitstellen kann, kann die untere als Kompressor ausgeführte Quelle 1b lediglich einen Volumenstrom von 300 Liter Atemgas/min zur Verfügung stellen.

Ferner sind auf der linken Seite unterschiedliche Verbraucher 2a, 2b, 2c für Atemluft dargestellt, wobei es sich entweder um Werkzeuge, Atemschutzgeräteträger oder Abzweige bzw. Verzweigungen 4 im Versorgungsnetz 3 handelt. An die in einem Versorgungsnetz 3 bedarfsgerecht vorgesehenen Abzweige bzw. Verzweigungen 4 sind wiederum ein oder mehrere Verbraucher 2 anschließbar. Auf diese Weise können Verbraucher 2 wahlweise direkt oder mittelbar über wenigstens einen Abzweig 4 mit einer Quelle 1 verbunden sein.

Die Steckverbinder 5 des Versorgungsnetzes 2 sind derart ausgeführt, dass an die obere Quelle 1a, die ein Volumenstrom von 550 Liter/min bereitstellt, wenigstens ein Verbraucher 2 mit einem Gesamtverbrauch von 130, 270 oder 550 Liter Atemgas/min anschließbar ist.

Hierbei ist es grundsätzlich unerheblich, ob ein entsprechend großer Verbraucher 2 an die Quelle 1a angeschlossen wird oder eine Mehrzahl entsprechend kleiner Verbraucher 2. Zu jeder Zeit ist allerdings sichergestellt, dass der verbraucherseitig benötigte Volumenstrom kleiner oder maximal gleich des quellenseitig bereitstellbaren Volumenstromes ist.

Die untere Quelle 1b, die einen Volumenstrom von 300 Liter Atemgas/min zur Verfügung stellen kann, kann lediglich Verbraucher 2 mit einem Volumenstrombedarf von 130 oder 270 Liter/min versorgen. Aus diesem Grund verfügen die Steckverbinder 5 des Systems über eine Codierung 8, so dass die untere Quelle 1b nicht mit einem Verbraucher 2 verbindbar ist, der einen Volumenstrom benötigt, der größer als 300 Liter/min ist. Somit wird zuverlässig ausgeschlossen, dass der in Figur 1 als Verbraucher 2c dargestellte Abzweig 4, der über einen Volumenstrombedarf von 550 Liter Atemgas/min verfügt, an die untere, als Kompressor ausgeführte Quelle 1b angeschlossen wird.

Gemäß der im Weiteren beschriebenen Ausführungsform wird die Codierung anhand eines Systems von Steckverbindern 5 mit einer Nennweite von 7,2 mm beschrieben. Die Nennweite entspricht hierbei dem freien Innendurchmessers des Steckers 7 sowie der Kupplung 6 eines Steckverbinders. Hierbei wird deutlich, dass der Einsatz einer erfindungsgemäß ausgeführten Codierung nicht auf eine spezielle Nennweite einer Steckverbindung begrenzt ist.

Bei dem beschriebenen Ausführungsbeispiel mit Steckverbindern, die eine Nennweite von 7,2 mm aufweisen, ist die Codierung 8 derart ausgeführt, dass der Stecker 7 für einen Atemschutzgeräteträger, der einen Bedarf von 130 Liter Atemluft/min bei 4bar hat, einen Durchmesser von 12 mm am Ende aufweist. Der nächste Stecker 7 dieses Grundsystems verfügt an seinem Ende über einen Durchmesser von 14 mm, der auf diese Weise für einen Volumenstrombedarf von 270 Liter Atemluft/min bei 4bar codiert ist. Der größte Stecker weist gemäß dem beschriebenen Ausführungsbeispiel einen Durchmesser von 16 mm an seinem Ende auf und codiert für einen Volumenstrombedarf bzw. eine benötigte Menge von Atemluft pro Zeiteinheit von 550 Liter/min bei 4bar.

Zu dem jeweiligen Stecker 7, der für einen speziellen maximalen Volumenstrombedarf codiert, gehört eine Kupplung 6 einer Aufnahme, die über den entsprechenden Durchmesser verfügt. Kupplung 6 und Stecker 7 sind somit codiert und bilden einen erfindungsgemäß ausgeführten Steckverbinder 5. Eine Kupplung 6 mit einer Aufnahme, die einen Durchmesser von 12 mm aufweist, codiert hierbei für einen maximal bereitstellbaren Volumenstrom von 130l/min bei 4bar, eine Kupplung 6 mit einer 14 mm-Aufnahme für einen Volumenstrom von 270 Liter/min bei 4bar und eine Kupplung mit einem Durchmesser der Steckeraufnahme von 16 mm für eine maximale Förderleistung von 550 Liter Atemluft/min bei 4bar. Ein Volumenstrombedarf von 270 Liter/min bei 4bar entspricht hierbei in etwa dem Bedarf zweier Atemschutzgeräteträger oder einem Atemschutzgeräteträger, der in einem Chemikalien-Schutzanzug mit Spülung arbeitet. Wird über die Kupplung 6 ein Volumenstrom von 550 Liter/min bei 4bar bereitgestellt, so können hierdurch, beispielsweise über einen Abzweig 4 in Form eines Y-Stücks, zwei Atemschutzträger als Verbraucher 2 mit einem Chemikalien-Schutzanzug oder ein Regelventil mit einem maximalen Volumenstrombedarf von 450 Liter/min versorgt werden. Gemäß der hier beschriebenen Ausführungsform sind die Steckverbindungen 5 derart ausgeführt, dass quellenseitig eine Kupplung 6 und verbraucherseitig ein Stecker 7 vorgesehen sind.

Aufgrund der geometrischen Ausführung bzw. des Aufbaus der Codierung 8 der verwendeten Steckverbinder 5 mit den abgestimmten Durchmessern der Stecker 7 und Kupplungen 6 kann ein Geräteträger als Verbraucher 2, der über einen Stecker 5, der über eine Codierung 8 in Form eines Endaußendurchmessers von 12 mm verfügt, in eine Kupplung mit einer Aufnahme, die einen Innendurchmesser von 12mm, 14mm und 16mm einkuppeln. Ebenso kann ein Abzweig 4 in Form eines Y-Stücks mit einer Codierung in Form eines Endbereichs des Steckers, der einen Außendurchmesser von 14 mm aufweist, in eine codierte Kupplung, deren Aufnahme über einen Innendurchmesser von 14mm verfügt, und in eine Kupplung, deren Aufnahme über einen Durchmesser von 16 mm verfügt, eingekuppelt werden.

Durch das erfindungsgemäß codierte System ist somit stets sichergestellt, dass einem Verbraucher 2 im Versorgungsnetz 3, gleichgültig, ob es sich um einen Atemschutzgeräteträger oder um ein Werkzeug handelt, eine ausreichende Menge von Luft zur Verfügung gestellt wird. Gleichzeitig ist ausgeschlossen, dass sich ein Verbraucher 2, der beispielsweise 550 Liter Atemgas/min benötigt, dessen codierter Stecker somit an seinem Ende einen Durchmesser von 16 mm aufweist, an eine Quelle 1 mit einer Förderleistung von 270 Liter/min, die über eine codiert Kupplung mit einem Innendurchmesser von 14 mm an ihrer Aufnahme verfügt, oder an eine Quelle 1 mit einer Förderleistung von 130 Liter/min, die über eine codierte Kupplung mit einem Innendurchmesser von 12 mm an ihrer Aufnahme verfügt, anschließt.

Das erläuterte Ausführungsbeispiel beruht auf einem System von Steckverbindern 5 mit einer Nennweite von 7,2 mm. Selbstverständlich lässt sich die erfindungsgemäße technische Lösung, die auf einer geeigneten Codierung von Kupplungen 6 und Steckern 7 beruht, auch auf andere Durchmesser übertragen. Ebenso ist es denkbar, an den Steckern 7 sowie den Kupplungen 6 geeignete Konturen vorzusehen, so dass stets nur Quellen 1, deren maximale Förderleistung größer oder gleich dem benötigten Volumenstrom der angeschlossenen Verbraucher 2 ist, mit den Verbrauchern verbindbar sind. Neben dem Vorsehen unterschiedlicher Durchmesser für die Codierung 8 sind auch Codierungen denkbar, die auf unterschiedlichen geometrischen Formen im Kontaktbereich zwischen Kupplung 6 und Stecker 7 beruhen. Beispielsweise ist es denkbar, dass die Kupplung, die für die größte bereitstellbare Förderleistung codiert eine kreisförmige Aufnahme aufweist, dass die Kupplung, die für eine mittlere Förderleistung codiert eine viereckige Aufnahme aufweist und dass die Kupplung, die für die kleinste Förderleistung codiert, eine dreieckige Aufnahme aufweist. Gleichzeitig sind die Konturen derart dimensioniert, dass ein Stecker 7 mit einer dreieckigen Außenkontur sowohl in die Kupplung 6 mit der dreieckigen, mit der viereckigen als auch mit der kreisförmigen Aufnahme, ein Stecker mit einer viereckigen Außenkontur sowohl in die Kupplung 6 mit der viereckigen als auch mit der kreisförmigen Aufnahme und ein Stecker mit einer kreisförmigen Außenkontur schließlich nur in die Kupplung 6 mit der kreisförmigen Aufnahme einsteckbar ist.

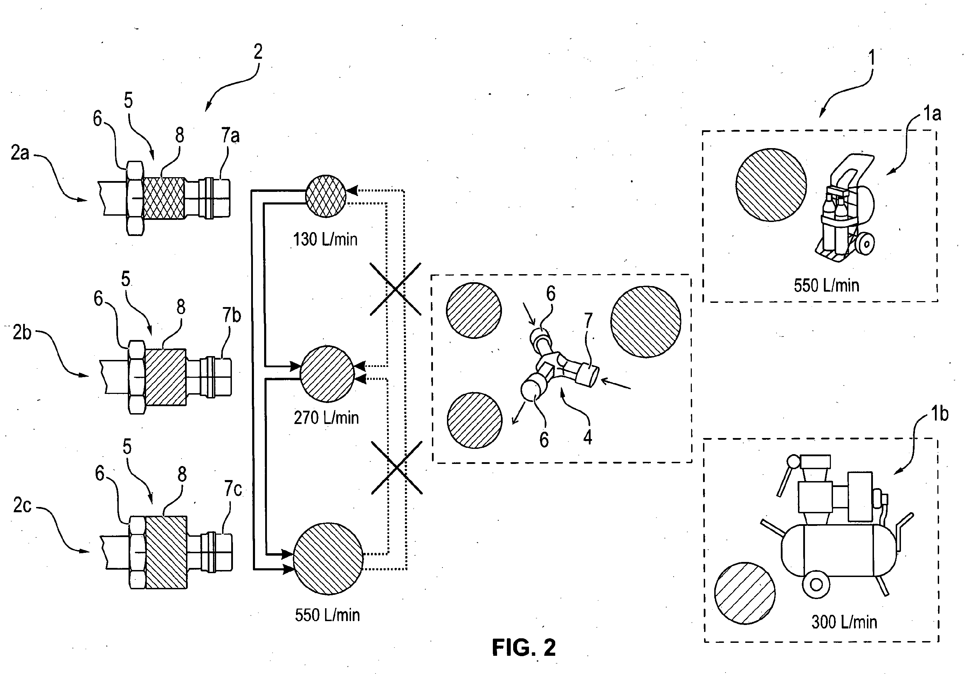

Figur 2 zeigt ein erfindungsgemäß ausgeführtes Kupplungssystem, bei dem die Codierung 8 mithilfe eines Rings am Stecker 7 bzw. einer entsprechenden Ausnehmung an der Kupplung 6 ausgeführt ist. Auch in diesem Fall weisen die als Codierung verwendeten Ringe unterschiedliche Außendurchmesser und die hierfür vorgesehenen Kupplungsaufnahmen entsprechende Innendurchmesser auf. Mit zunehmender Förderleistung bzw. höherem Volumenstrombedarf nimmt auch die Größe des Außendurchmessers des Ringes zu. In Figur 2 sind auf der linken Seite übereinander drei codierte Stecker 7a, 7b, 7c abgebildet. Der oberste Stecker 7a ist für einen Volumenstrom von 130 Liter Atemgas/min bei 4 bar, der mittlere Stecker 7b für einen Volumenstrom von 270 Liter/min bei 4 bar und der unterste Stecker 7c für einen Volumenstrom von 550 Liter/min bei 4 bar codiert. Entsprechend dem jeweiligen Außendurchmesser der als Codierung 8 vorgesehenen Ringe können diese Stecker 7a, 7b, 7c in geeignete Kupplungen 6, über die der jeweils benötigte Volumenstrom zur Verfügung gestellt wird, eingeführt werden.

Grafisch ist dieses in Figur 2 mithilfe von Kreisen, die einen unterschiedlichen Außendurchmesser aufweisen, dargestellt. Der oberste Stecker 7a lässt sich in dem dargestellten Ausführungsbeispiel in drei unterschiedliche Kupplungen einführen, während der unterste Stecker 7c ausschließlich in eine Art von Kupplung, nämlich solche, die für eine Förderleistung von 550 Liter/min codiert sind, eingeführt werden kann.

In der Mitte von Figur 2 ist ein Abzweigelement 4 dargestellt, das einen Stecker 7 und zwei Kupplungen 6 aufweist und das an eine Druckluftquelle 1 anschließbar ist. Durch den Abzweig 4 wird das von der Druckluftquelle 1 gelieferte Medium auf die zwei Kupplungen 6 aufgeteilt. Kupplungsseitig ist das Abzweigelement 4 jeweils für einen Volumenstrom von 270 Liter/min codiert. Steckerseitig ist das Abzweigelement 4 für einen Volumenstrom von 550 Liter/min codiert. Durch diese erfindungsgemäß ausgeführte Codierung 8 ist sichergestellt, dass über das Abzweigelement 4 ein oder zwei Verbraucher 2 mit einer Druckluftquelle 1 verbindbar sind, wobei die Verbraucher 2 zu jeder Zeit in ausreichendem Maße mit der benötigten Druckluft versorgbar sind.

Auf der rechten Seite der Figur 2 sind zwei Druckluftquellen 1a, 1b dargestellt, von denen die obere 1a eine Förderleistung von 550 Liter/min und die untere 1b von 300 Liter/min aufweist. Das Abzweigelement 4 kann aufgrund der Codierung 8 ausschließlich an die obere Druckluftquelle 1a angeschlossen werden. So ist sichergestellt, dass zwei an das Abzweigelement 4 angeschlossene Verbraucher 2 stets mit einer ausreichenden Menge von Druckluft versorgt werden können. Ein Anschluss des Abzweigelementes 4 an die untere Druckluftquelle 1b, deren Förderleistung nicht ausreicht, um zwei Verbraucher mit einem Volumenstrombedarf von 270 Liter/min zu versorgen, ist dagegen aufgrund der Codierung 8 nicht möglich. Kupplungsseitig können an das Abzweigelement 4 maximal zwei Verbraucher 2 mit einem Volumenstrombedarf von jeweils 270 Liter/min angeschlossen werden. Gleichfalls ist es möglich, nur einen Verbraucher anzuschließen und/oder Verbraucher mit einem geringeren Volumenstrombedarf, bspw. einem Volumenstrombedarf von 130 Liter/min, anzuschließen.

Der Anschluss eines Verbrauchers 2, der einen Volumenstrom von 550 l/min benötigt, an eine Kupplung des in Figur 2 dargestellten Abzweigelementes ist nicht möglich. Ein derartiger Verbraucher 2 könnte lediglich direkt mit der oberen Druckluftquelle 1a verbunden werden. Weiterhin könnte ein Verbraucher 2, der einen Volumenstrombedarf von 550 l/min aufweist, nicht direkt an die untere 1b, eine vergleichsweise kleine Förderleistung von 300 l/min aufweisende Druckluftquelle angeschlossen werden.

Dagegen könnten die Verbraucher 2, die einen Volumenstrombedarf von 130 Liter/min bzw. 270 Liter/min aufweisen, auch direkt an die Kupplung 6 der oberen Druckluftquelle 1a, die eine Förderleistung von 550 Liter/min aufweist, angeschlossen werden. In jedem Fall ist sichergestellt, dass ein Verbraucher 2 mit der von ihm pro Zeiteinheit benötigten Menge an Druckluft versorgt werden kann.

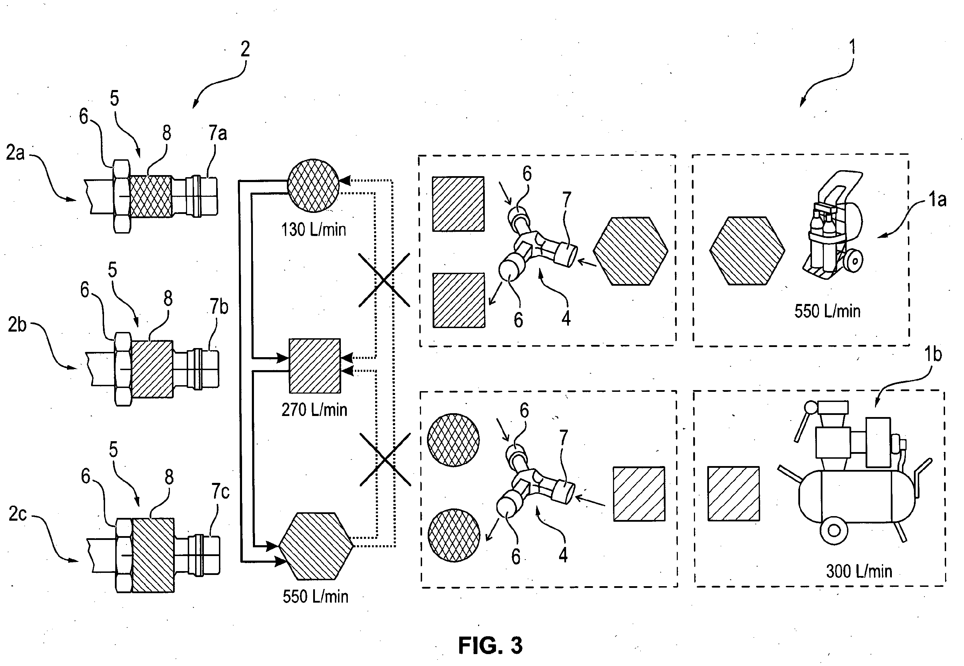

Figur 3 zeigt wiederum schematisch ein Atemluft-Versorgungsnetz 3 mit drei Steckern 7a, 7b, 7c zwei Abzweigelemente 4a, 4b sowie zwei Druckluftquellen 1a, 1b. Die drei unterschiedlichen Verbraucher 2 mit den Steckern 7a, 7b, 7c benötigen haben jeweils einen Volumenstrombedarf von 130, 270 bzw. 550 Liter Druckluft/min. Von den dargestellten Druckluftquellen 1a, 1b hat die obere 1a eine Förderleistung von 550 Liter/min und die untere 1b von 300 Liter/min. In dem Ausführungsbeispiel gemäß Fig. 3 wird die Codierung 8 der einzelnen Stecker 7 sowie der hierfür vorgesehenen Kupplungen 6 nicht durch unterschiedlich ausgeführte Außenkonturen an den Steckern 7, die in geeignete Aufnahmen bzw. Ausnehmungen in den hierfür vorgesehenen Kupplungen 6 einführbar sind, vorgesehen. Die geometrischen Formen sind hierbei derart ausgeführt und dimensioniert, dass Stecker 7, die für einen speziellen Volumenstrombedarf codiert sind, in Kupplungen 6, die wenigstens diesen Volumenstrombedarf bereitstellen, eingeführt werden können. Das Einführen eines Steckers 7 in eine Kupplung, die einen zu geringen Druckluft-Volumenstrom bereitstellt, ist dagegen aufgrund der Codierung ausgeschlossen.

Die für die Codierung 8 gewählten Außenkonturen in Form von Kreisen, Vierecken sowie Sechsecken sind in Figur 3 ebenfalls schematisch dargestellt. In jedem Fall ist wiederum sichergestellt, dass jeder Verbraucher mit einer ausreichenden Menge des von ihm benötigten fluidförmigen Mediums, insbesondere mit Druckluft, versorgbar ist. Das Anschließen eines Verbrauchers 2 an eine Druckluftquelle 1 oder die Kupplung 6 eines Abzweigelementes 4, die eine zu geringe Menge des pro Zeiteinheit benötigten Mediums bereitstellt, ist ausgeschlossen.

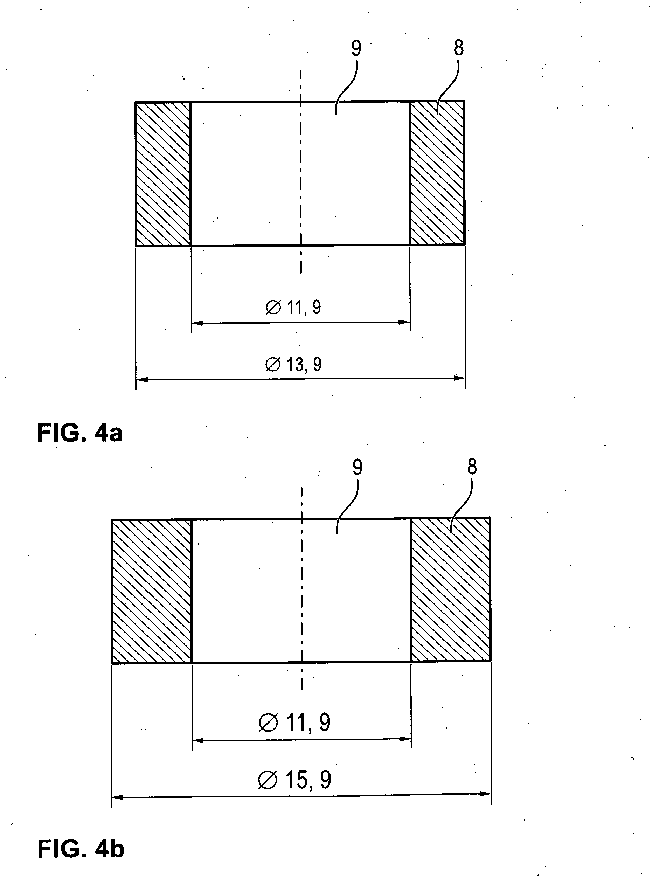

Figur 4 zeigt zwei Beispiele für die erfindungsgemäße Codierung von Mitteldrucksteckern 7. Beide Stecker 7 verfügen über einen fluiddurchlässigen Strömungskanal 9 mit einem Durchmesser von 11,9 mm. Dieser Durchflusskanal 9 ist von einer als Codierung 8 genutzten ringförmigen Kunststoffhülse umgeben, deren Wanddicke in Abhängigkeit der benötigten Codierung gewählt wird. Auf diese Weise wird der Außendurchmesser der Codierung 8 variiert.

Der in Figur 4 a dargestellte Mitteldruckstecker 7 weist im Bereich der Codierung 8 einen Außendurchmesser von 13,9 mm auf, während der Mitteldruckstecker 7 gemäß Figur 4b einen Außendurchmesser von 15,9 mm aufweist. Bevorzugt sind die Kunststoffhülsen aus POM hergestellt. In Ergänzung zur Variation der Dicke der jeweiligen Kunststoffhülse ist es denkbar, die Farbe und/oder die äußere Gestaltung, beispielsweise durch Rändelung, auf geeignete Weise zu verändern. Werden die dargestellten Mitteldruckstecker in ein erfindungsgemäß ausgeführtes Versorgungsnetz, beispielsweise für die Druckluftversorgung unterschiedlicher Verbraucher, integriert, so ist es denkbar, den Mitteldruckstecker 7 gemäß Figur 4 a für einen Volumenstrombedarf von 130 Liter/min bei 4 bar einzusetzen, während der in Figur 4 b gezeigte Stecker für einen Volumenstrombedarf von 550 Liter/min bei 4 bar eingesetzt wird. Hierbei ist es grundsätzlich unerheblich, für welchen Volumenstrombedarf die jeweilige Codierung verwendet wird. Erfindungswesentlich ist jeweils, dass jeder in einem Versorgungsnetz an eine Quelle angeschlossene Verbraucher zu jeder Zeit mit einer ausreichenden Menge des von ihm benötigten fluidförmigen Mediums versorgt wird.

### BezuQszeichenliste

1 Quelle
   1a Druckgasflasche
   1b Kompressor
2 Verbraucher
   2a Verbraucher mit einem Atemgasbedarf von 130 l/min
   2b Verbraucher mit einem Atemgasbedarf von 270 l/min
   2c Verbraucher mit einem Atemgasbedarf von 550 l/min
3 Versorgungsnetz
4 Abzweigelement
5 Steckverbinder
6 Kupplung
7 Stecker
   7a Stecker codiert für einen Atemgasbedarf von 130 l/min
   7b Stecker codiert für einen Atemgasbedarf von 270 l/min
   7c Stecker codiert für einen Atemgasbedarf von 550 l/min
8 Codierung
9 Strömungskanal

## Patentansprüche

1. Vorrichtung zur Versorgung eines Verbrauchers (2) mit einem fluidförmigen Medium, die zwei Versorgungsnetze (3) aufweist,
wobei jedes Versorgungsnetz jeweils eine Quelle (1), Leitungselemente und wenigstens einen Steckverbinder (5) zur Verbindung wenigstens zweier Leitungselemente aufweist, über das der Verbraucher (2) von der Quelle (1) mit dem Medium versorgbar ist,
wobei die eine Quelle (1a) einen größeren Volumenstrom pro Zeiteinheit als die andere Quelle (1b) bereitzustellen vermag,
wobei jeder wenigstens eine Steckverbinder (5) eines Versorgungsnetzes über einen Stecker (7) und eine Kupplung (6) mit einer Codierung (8) zur vertauschungssicheren Verbindung des Steckers (7) mit der Kupplung (6) verfügt, so dass eine ausreichende Versorgung des Verbrauchers (2) mit dem Medium sichergestellt ist,
wobei ein erster Steckverbinder (5) mit einer ersten Codierung (8) und wenigstens ein zweiter Steckverbinder (5) mit einer zweiten Codierung (8) vorgesehen sind,
wobei sich die erste Codierung (8) von der zweiten Codierung (8) unterscheidet,
wobei zeitgleich wenigstens zwei Verbraucher (2) über eines der Versorgungsnetze von der jeweiligen Quelle (1) mit einem Medium versorgbar sind und
wobei die beiden Codierungen (8) derart ausgeführt sind, dass ausschließlich Verbindungen herstellbar sind, so dass die von den wenigstens zwei Verbrauchern (2) je Zeiteinheit benötigte Menge des fluidförmigen Mediums nicht größer als die von der jeweiligen Quelle (1) pro Zeiteinheit maximal bereitstellbare Menge des fluidförmigen Mediums ist.

2. Vorrichtung nach Anspruch 1,
**dadurch gekennzeichnet, dass** ein Abzweigelement (4) quellenseitig einen Stecker (7) und verbraucherseitig eine Kupplung (6) aufweist.

3. Vorrichtung nach einem der Ansprüche 1 bis 2,
**dadurch gekennzeichnet, dass** die Quelle (1) einen Drucklufterzeuger und / oder eine Gasversorgungseinheit aufweist.

4. Vorrichtung nach einem der Ansprüche 1 bis 3,
**dadurch gekennzeichnet, dass** die Codierung (8) im Verbindungsbereich zwischen Stecker (7) und Kupplung (8) eine Außenkontur am Stecker (7) aufweist, die in eine Gegenkontur im Innenbereich der Kupplung einführbar ist.

5. Vorrichtung nach Anspruch 4,
**dadurch gekennzeichnet, dass** die Außen- und die Gegenkontur einer Codierung (8) einen runden, ovalen oder mehreckigen Querschnitt aufweisen.

6. Vorrichtung nach einem der Ansprüche 1 bis 5,
**dadurch gekennzeichnet, dass** eine Codierung (8) eine optisch und / oder haptisch wahrnehmbare Markierung aufweist.

7. Vorrichtung nach einem der Ansprüche 1 bis 6,
**dadurch gekennzeichnet, dass** sich die erste und die zweite Codierung (8) durch eine Länge eines Steckerschafts im Verbindungsbereich zwischen Stecker und Kupplung unterscheiden.

## Claims

1. Apparatus for supplying a consumer (2) with a fluid medium, which apparatus has two supply networks (3),
wherein each supply network respectively has a source (1), line elements and at least one plug connector (5) for connecting at least two line elements, via which supply network the consumer (2) can be supplied with the medium by the source (1),
wherein one source (1a) is able to provide a larger volumetric flow per unit time than the other source (1b),
wherein each at least one plug connector (5) of a supply network has a plug (7) and a coupling (6) with a coding (8) for connecting the plug (7) to the coupling (6) in a manner protected against transposition, with the result that it is ensured that the consumer (2) is sufficiently supplied with the medium,
wherein a first plug connector (5) with a first coding (8) and at least one second plug connector (5) with a second coding (8) are provided,
wherein the first coding (8) differs from the second coding (8),
wherein at least two consumers (2) can be supplied with a medium by the respective source (1) at the same time via one of the supply networks, and
wherein the two codings (8) are designed such that only connections can be established, with the result that the amount of fluid medium required by the at least two consumers (2) per unit time is not greater than the maximum amount of fluid medium that can be provided by the respective source (1) per unit time.

2. Apparatus according to Claim 1,
**characterized in that** a branching element (4) has a plug (7) on the source side and a coupling (6) on the consumer side.

3. Apparatus according to one of Claims 1 to 2,
**characterized in that** the source (1) has a compressed air generator and/or a gas supply unit.

4. Apparatus according to one of Claims 1 to 3,
**characterized in that** the coding (8) in the connecting region between the plug (7) and the coupling (8) has an outer contour on the plug (7) that can be inserted into a mating contour in the interior of the coupling.

5. Apparatus according to Claim 4,
**characterized in that** the outer contour and the mating contour of a coding (8) have a round, oval or polygonal cross section.

6. Apparatus according to one of Claims 1 to 5,
**characterized in that** a coding (8) has an optically and/or haptically perceptible marking.

7. Apparatus according to one of Claims 1 to 6,
**characterized in that** the first and the second coding (8) differ by a length of a plug shaft in the connecting region between the plug and the coupling.

## Revendications

1. Dispositif pour alimenter un consommateur (2) en un milieu fluide, qui présente deux réseaux d'alimentation (3),
chaque réseau d'alimentation présentant respectivement une source (1), des éléments de conduite et au moins un connecteur enfichable (5) pour la connexion d'au moins deux éléments conduite, par l'intermédiaire duquel le consommateur (2) peut être alimenté en fluide à partir de la source (1),
la première source (1a) étant capable de fournir un débit volumique par unité de temps supérieur à celui de l'autre source (1b),
chaque au moins un connecteur enfichable (5) d'un réseau d'alimentation présente une fiche (7) et un raccord (6) avec un codage (8) pour une connexion permutable sécurisée de la fiche (7) avec le raccord (6), de sorte qu'une alimentation suffisante du consommateur (2) est assuré avec le milieu,
un premier connecteur enfichable (5) avec un premier codage (8) et au moins un second connecteur enfichable (5) avec un second codage (8) état prévus,
le premier codage (8) étant différent du second codage (8),
au moins deux consommateurs (2) pouvant être alimentés en même temps en un milieu par l'intermédiaire d'un des réseaux d'alimentation à partir de la source respective (1), et
les deux codages (8) étant réalisés de telle sorte que seules des connexions peuvent être établies, de telle sorte que la quantité du milieu fluide requise par les au moins deux consommateurs (2) par unité de temps n'est pas supérieure à la quantité du milieu fluide maximale pouvant être fournie par la source respective (1) par unité de temps.

2. Dispositif selon la revendication 1,
**caractérisé en ce qu'**un élément de dérivation (4) présente une fiche (7) côté source et un raccord (6) côté consommateur.

3. Dispositif selon l'une quelconque des revendications 1 à 2,
**caractérisé en ce que** la source (1) présente un générateur d'air comprimé et/ou une unité d'alimentation en gaz.

4. Dispositif selon l'une quelconque des revendications 1 à 3,
**caractérisé en ce que** le codage (8) présente, dans la zone de connexion entre la fiche (7) et le raccord (8), un contour extérieur au niveau de la fiche (7), qui peut être introduit dans un contour antagoniste dans la zone intérieure du raccord.

5. Dispositif selon la revendication 4,
**caractérisé en ce que** les contours extérieur et opposé d'un codage (8) présentent une section transversale ronde, ovale ou polygonale.

6. Dispositif selon l'une quelconque des revendications 1 à 5,
**caractérisé en ce qu'**un codage (8) présente un marquage perceptible optiquement et/ou haptiquement.

7. Dispositif selon l'une quelconque des revendications 1 à 6,
**caractérisé en ce que** le premier et le second codage (8) se distinguent par une longueur d'une tige de fiche dans la zone de connexion entre la fiche et raccord.
